# FASCICULE DE BREVET EUROPEEN

(11) **EP 2 561 575 B1**
(45) Date de publication et mention de la délivrance du brevet: **17.03.2021**
(21) Numéro de dépôt: 11715521.8
(22) Date de dépôt: 18.04.2011
(51) Int. Cl.: H01M 8/18, H01M 8/04, C25B 1/12, H01M 16/00, H01M 8/0656

(54) **DISPOSITIF DE STOCKAGE ET DE RESTITUTION D'ENERGIE ELECTRIQUE**
VORRICHTUNG ZUR SPEICHERUNG UND WIEDERHERSTELLUNG VON ELEKTRISCHER ENERGIE
DEVICE FOR STORING AND RESTORING ELECTRICAL ENERGY

(30) Priorité: 20.04.2010 FR 1053020
(43) Date de publication de la demande: 27.02.2013
(73) Titulaire: Helion, 13545 Aix en Provence (FR)
(72) Inventeur: BESSE, Serge, F-94200 Ivry sur Seine (FR); RAUGEL, Ewen, F-13002 Marseille (FR); BOUCHARD, Patrick, F - 84120 La Bastidonne (FR); HOGUET, Christophe, F - 84240 Sannes (FR); BERTRAND, Lucas Jean, F - 92400 Courbevoie (FR); CHAUDRON, Valéry, F - 04100 Manosque (FR); REBER, Jean-Daniel, F - 84120 Pertuis (FR); VOIRON, Lucile, F - 13090 Aix-en-Provence (FR)
(74) Mandataire: Lebkiri, Alexandre
(86) Numéro de dépôt international: PCT/EP2011/056135
(87) Numéro de publication internationale: WO 2011/131622

(56) Documents cités:
- DE-A1- 10 055 973
- DE-U1-202005 011 017
- US-A- 4 326 013
- US-A1- 2004 013 923
- US-A1- 2005 004 716
- US-A1- 2005 178 432

## Description

La présente invention concerne un dispositif de stockage et de restitution d'énergie électrique.

L'invention se rapporte au domaine de la production, du stockage et de la fourniture d'électricité, y compris ceux concernant le domaine des énergies renouvelables, et plus particulièrement au domaine de la production d'hydrogène et d'oxygène par électrolyse de l'eau et de la production d'électricité par pile à combustible alimentée en hydrogène et en oxygène.

La pile à combustible est un dispositif électrochimique qui convertit l'énergie chimique d'un combustible en énergie électrique. Le principe de fonctionnement de ce générateur électrochimique repose sur la réaction de synthèse électrochimique de l'eau à partir d'un comburant, tel que l'oxygène, et d'un combustible, tel que l'hydrogène.

Le principe de fonctionnement d'un électrolyseur est l'inverse de celui d'une pile à combustible. Alors que la pile à combustible combine, par réaction électrochimique du dihydrogène et du dioxygène pour former de l'eau et fournir de l'électricité, l'électrolyse dissocie l'eau en ses éléments constitutifs, c'est-à-dire en hydrogène et en oxygène, et nécessite une alimentation électrique.

Ainsi, il est connu d'associer un électrolyseur et une pile à combustible de façon à stocker de l'énergie électrique produite par une source et d'en restituer sur demande Par exemple, un tel système est décrit dans le document US 2005/178432 A1.

Cette association est connue notamment pour le stockage d'énergie électrique produite de façon intermittente ou non par exemple par des énergies renouvelables, telles que l'éolien ou le solaire, mais également par n'importe quelle source primaire. Ainsi, l'énergie électrique produite par la source primaire est transformée par réaction électrochimique, via l'électrolyseur, en dihydrogène et en dioxygène qui sont ensuite stockés sous pression. Le dihydrogène et le dioxygène sont ensuite convertis sur demande en énergie électrique au moyen d'une pile à combustible lorsqu'une charge électrique cliente a besoin d'électricité que le réseau ne peut fournir ou lorsque la source primaire ne produit plus ou pas assez d'électricité par rapport à la demande de la charge électrique en aval ou du réseau électrique. Ainsi, si le dispositif est couplé au réseau électrique et alimente un client, ledit dispositif sert à restituer de l'électricité à la demande du client lors de coupures du réseau ; et si le dispositif est couplé à des énergies renouvelables, le dispositif est utilisé pour restituer de l'électricité lorsque la source renouvelable ne produit pas ou pas assez d'électricité.

Les différents systèmes connus sont généralement encombrants et nécessitent des espaces importants pour leurs installations. Ils sont également peu modulaires et flexibles, notamment au niveau de la quantité d'énergie disponible, ou capacité électrique, qu'ils sont susceptibles de fournir sur le réseau du client. Enfin, les installations sur site sont relativement complexes et leur maintenance est difficile. Toutes ces difficultés limitent ainsi une diffusion importante des systèmes électrolyseur/pile à combustible dans l'industrie.

Dans ce contexte, l'invention vise à proposer un dispositif de stockage et de restitution d'énergie électrique visant à résoudre les problèmes mentionnés ci-dessus.

A cette fin, l'invention propose un dispositif de stockage et de restitution d'énergie électrique selon la revendication 1. Ce dispositif comporte:
- des moyens d'électrolyse de l'eau alimentés en entrée par de l'eau et de l'énergie électrique et produisant en sortie au moins du dihydrogène et du dioxygène sous forme gazeux :
- des moyens de stockage dudit dihydrogène sous forme gazeux ;
- une pile à combustible alimentée en entrée par au moins le dihydrogène (H₂) stocké et produisant en sortie au moins de l'énergie électrique :
- des moyens de contrôle-commande pour contrôler le fonctionnement dudit dispositif en mode pile à combustible ou en mode électrolyseur ;
- une enceinte dans laquelle sont agencés lesdits moyens d'électrolyse de l'eau, ladite pile à combustible et lesdits moyens de contrôle-commande;
- des moyens de connexions permettant de relier ladite enceinte aux dits moyens de stockage dudit dihydrogène externes à ladite enceinte.

Ainsi, grâce à l'invention le dispositif de stockage et de restitution d'énergie électrique est formé par l'association d'un électrolyseur et d'une pile à combustible conditionnés dans une enceinte unique, autonome et compacte limitant l'encombrement d'un tel dispositif. Les moyens de stockage du gaz de dihydrogène issu de l'électrolyse de l'eau sont disposés séparément à l'extérieur de l'enceinte, ce qui permet de réduire de façon conséquente le volume d'encombrement d'un tel dispositif et permet d'adapter son installation en fonction des différentes contraintes d'espace disponible sur site.

Le conditionnement de l'électrolyseur et de la pile à combustible dans une enceinte unique permet d'améliorer et de faciliter l'installation sur site d'un tel dispositif mais également la maintenance par la standardisation, la mise en commun et la réduction d'éléments nécessaires au fonctionnement de l'électrolyseur et de la pile à combustible. Grâce au dispositif selon l'invention, la maintenance est réalisée par échange standard des différents éléments constitutifs du dispositif.

Ainsi, le dispositif de stockage et de restitution d'énergie électrique selon l'invention comportant l'électrolyseur et la pile à combustible conditionnés dans une enceinte, et des moyens de stockage de gaz externes à l'enceinte, permet une installation sur site rapide par connexion de l'enceinte à des entrées et à des sorties nécessaires au fonctionnement du dispositif tout en réduisant de façon optimale l'encombrement.

L'installation du dispositif selon l'invention est réalisée simplement en connectant l'enceinte à la source primaire d'énergie électrique, à une source d'eau, aux moyens de stockage de l'hydrogène, à une source ou à un moyen de stockage de l'oxygène et au réseau électrique.

Le dispositif de stockage et de restitution d'énergie électrique selon l'invention peut également présenter une ou plusieurs des caractéristiques ci-dessous, considérées individuellement ou selon toutes les combinaisons techniquement possibles :
- le dispositif comporte des moyens de stockage dudit dioxygène sous forme gazeux ;
- ledit dispositif comporte des moyens de connexions reliant ladite enceinte aux dits moyens de stockage dudit dioxygène externes à ladite enceinte ;
- ladite pile à combustible est alimentée en entrée par ledit dioxygène stocké ;
- ladite enceinte comporte des moyens de conversion d'énergie électrique communs au dit électrolyseur et à ladite pile à combustible ;
- ladite enceinte comporte des moyens de refroidissement communs au dit électrolyseur et à ladite pile à combustible ;
- ladite enceinte comporte un réservoir d'eau permettant d'alimenter ledit électrolyseur et permettant de stocker l'eau produite de ladite pile à combustible ;
- ladite enceinte est alimentée en entrée par une source d'énergie renouvelable et/ou par une source d'énergie fossile et/ou par une source d'énergie nucléaire.
- Le dispositif comporte des moyens de récupération de chaleur, notamment un circuit de refroidissement de l'enceinte.

D'autres caractéristiques et avantages de l'invention ressortiront plus clairement de la description qui en est donnée ci-dessous, à titre indicatif et nullement limitatif, en référence aux figures annexées, parmi lesquelles :
- la figure 1 est une représentation schématique d'un premier exemple de réalisation d'un dispositif selon l'invention ;
- la figure 2 est une représentation schématique d'un deuxième exemple de réalisation d'un dispositif selon l'invention.

Dans toutes les figures, les éléments communs portent les mêmes numéros de référence sauf précision contraire.

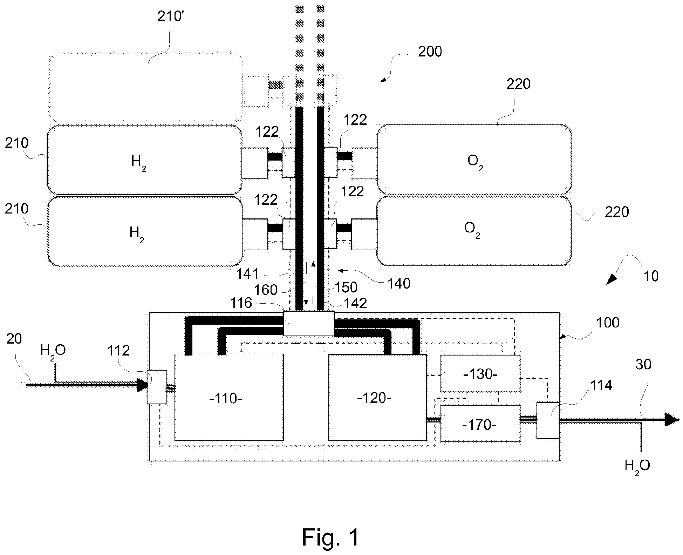

La figure 1 illustre schématiquement un premier exemple de réalisation d'un dispositif de stockage et de restitution d'énergie électrique selon l'invention.

Le dispositif 10 est relié à une source d'énergie électrique primaire 20 qui peut produire de l'énergie électrique de façon intermittente, par exemple par des énergies renouvelables, telles que l'éolien ou le solaire, mais également par n'importe quelle source primaire, du type centrale électrique.

Le dispositif 10 permet de convertir, par réaction chimique, l'énergie électrique primaire produite sous la forme de gaz stockable. Les gaz ainsi produits et stockés sont ensuite transformés par réaction électrochimique inverse de façon à reproduire une énergie électrique, dite secondaire, en cas de besoin ou d'arrêt momentané de la source primaire d'énergie électrique.

A cet effet, le dispositif 10 selon l'invention est formé par l'association d'une enceinte 100 qui est avantageusement compacte de façon à pouvoir être installée facilement sur site et par des moyens de stockage 200 qui sont externes à l'enceinte 100 et qui sont reliés à celle-ci par des moyens de connexion 140.

L'enceinte 100 est une enceinte autonome de type container ou caisson métallique de forme sensiblement parallélépipédique pouvant être installée indifféremment à l'intérieur ou à l'extérieur d'un bâtiment. Avantageusement, l'enceinte 100 est installée à l'extérieur d'un bâtiment de façon à ne pas encombrer inutilement les espaces internes des bâtiments. A cet effet, l'enceinte 100 est réalisée de façon à pouvoir supporter les différentes conditions météorologiques. L'enceinte 100 est donc étanche, insensible aux intempéries (UV, variations de température, etc.).

Les moyens de stockage 200 externes à l'enceinte 100 sont disposés indifféremment à proximité ou de façon relativement éloignée de l'enceinte 100.

Ainsi, le dispositif 10 est susceptible d'être mis en œuvre sans difficulté dans des conditions extrêmes à l'extérieur.

L'aspect modularité mentionné ici, indépendamment d'un autre aspect modularité développé ultérieurement dans la description, permet ainsi d'adapter l'installation du dispositif 10 en fonction des besoins des utilisateurs et des différentes contraintes d'espace. A titre d'exemple lorsque l'enceinte 100 est disposée à l'intérieur d'un bâtiment, les moyens de stockage 200 peuvent être disposés à l'extérieur du bâtiment qui abrite l'enceinte 100 du dispositif 10 de sorte qu'ils n'occupent pas un espace utile sur site.

L'enceinte 100 comporte :
- des moyens d'électrolyse de l'eau 110, tels qu'un électrolyseur ;
- une pile à combustible 120 ;
- des moyens de contrôle-commande 130 permettant de contrôler le fonctionnement du dispositif 10 en mode pile à combustible ou en mode électrolyseur ;
- des moyens pour convertir l'énergie électrique 170 :
- des moyens de refroidissement (non représentés) de l'enceinte 100
- une interface d'entrée 112 ;
- une interface de sortie 114 ;
- une interface 116 permettant de communiquer avec les moyens de stockage 200.

Les interfaces 112, 114, 116 sont des interfaces de communication standard permettant de communiquer avec les autres éléments externes auxquels l'enceinte 100 est susceptible de s'associer. Les interfaces 112, 114, 116 sont des interfaces classiques permettant une connexion démontable rapide et étanche de tuyauterie de circulation de fluide (H₂0) ou de gaz (H₂ et O₂), et/ou une connexion démontable de puissance électrique et/ou une connexion démontable de commande électrique.

Ainsi, l'interface d'entrée 112 et l'interface de sortie 114 sont des interfaces comportant au moins une connexion démontable de puissance électrique et une connexion démontable de tuyauterie d'eau.

L'interface 116 est une interface comportant au moins une connexion démontable de commande électrique et une connexion démontable de tuyauterie de gaz, et avantageusement une connexion démontable de tuyauterie de dihydrogène (H₂) et une connexion démontable de tuyauterie de dioxygène (O₂).

L'interface d'entrée 112 est reliée à la source primaire 20 d'énergie électrique mais également à un réseau d'eau ou à un réservoir d'eau, avantageusement unique, externe à l'enceinte 100.

L'interface de sortie 114 est reliée au réseau électrique 30 de l'utilisateur mais également au réseau d'eau ou au réservoir d'eau unique. L'entrée d'eau, via l'interface d'entrée 112, permet d'alimenter l'électrolyseur 110 en mode électrolyseur et la sortie d'eau, via l'interface de sortie 114, permet d'évacuer l'eau produite par la pile à combustible. L'enceinte 100 comporte également des moyens de gestion de l'eau (non représentés) permettant de piloter les entrées et les sorties d'eau en fonction du mode de fonctionnement du dispositif 10, par exemple par un système de vannes pilotées par les moyens de gestion de l'eau.

Ainsi, l'enceinte 100 présente des interfaces de communication permettant au moins une connexion démontable de puissance électrique, une connexion démontable de tuyauterie d'eau, et une connexion démontable de tuyauterie de gaz.

Selon une variante du dispositif selon l'invention, le réservoir d'eau peut être intégré à l'intérieur de l'enceinte 100.

En présence d'une alimentation électrique primaire, l'électrolyseur 110 permet de dissocier l'eau en ses éléments constitutifs sous la forme de gaz, c'est-à-dire du dihydrogène (H₂) et du dioxygène (O₂).

L'électrolyse de l'eau (H₂O) est un procédé bien connu qui constitue un moyen pour produire du dihydrogène (H₂) et du dioxygène (O₂) de grande pureté sur mesure ou sur demande.

De façon classique, l'électrolyseur 110 comporte une succession d'étages élémentaires, appelés également cellules électrochimiques ou cellules électrolytiques (« stack » en langue anglaise), chacune des cellules électrolytiques étant formée par au moins une cathode, un électrolyte, et une anode ; l'électrolyte étant enserré entre l'anode et la cathode. La cathode et l'anode sont des électrodes poreuses conductrices électriquement alors que l'électrolyte est une membrane, isolante électriquement, et conductrice ionique (anionique ou protonique).

Sous l'effet d'une différence de potentiel entre les deux électrodes, le réactif, c'est-à-dire l'eau (H₂O), est dissocié en gaz de dihydrogène (H₂) et en gaz de dioxygène (O₂).

Le dispositif 10 selon l'invention utilise donc le principe de l'électrolyse de l'eau pour convertir l'énergie électrique produite par la source primaire 20 sous la forme de gaz de dihydrogène (H₂) et de dioxygène (O₂).

L'électrolyseur 110 est apte à fonctionner à différentes pressions sur une plage de pression variant sensiblement entre la pression atmosphérique et quelques dizaines de bars.

La pile à combustible 120 est également un dispositif électrochimique convertissant l'énergie chimique d'un combustible en énergie électrique selon la réaction de synthèse électrochimique de l'eau.

Le principe de fonctionnement de ce générateur électrochimique repose sur la réaction de synthèse électrochimique de l'eau à partir d'un comburant, le dioxygène, et d'un combustible, le dihydrogène. Le principe de fonctionnement de la pile à combustible 120 est donc l'inverse du fonctionnement de l'électrolyseur 110.

De façon classique, la pile à combustible 120 comporte également une succession de cellules électrolytiques (« stack » en langue anglaise) formées par au moins une anode, un électrolyte, et une cathode ; l'électrolyte étant enserré entre l'anode et la cathode. La cathode et l'anode sont des électrodes poreuses conductrices électriquement alors que l'électrolyte est une membrane, isolante électriquement, et conductrice ionique (anionique ou protonique).

Dans la pile à combustible 120, le combustible, c'est-à-dire le dihydrogène (H₂), est apporté au niveau de l'anode de façon à subir une oxydation catalytique libérant des protons et des électrons dans le cas d'une membrane échangeuse de protons. Les électrons produits circulent le long du circuit électrique extérieur, alors que les protons sont transportés de l'électrolyte vers la cathode, où ils se recombinent avec les électrons et le comburant, c'est-à-dire du dioxygène (O₂). Cette réduction cathodique s'accompagne d'une production d'eau et d'un établissement d'une différence de potentiel entre les deux électrodes qui servira à alimenter le réseau 30.

Selon le mode de réalisation illustré, l'électrolyseur 110 et la pile à combustible 120 ont des cellules électrolytiques distinctes. Selon un autre mode de réalisation, l'électrolyseur et la pile à combustible comportent au moins une cellule électrolytique en commun, on parle alors de cellule électrolytique ou de « stack » réversible.

Le dispositif 10 selon l'invention permet de fonctionner selon deux modes de fonctionnement distincts : un premier mode de fonctionnement dit « mode électrolyseur » et un second mode de fonctionnement dit « mode pile à combustible ».

Dans le premier mode de fonctionnement, dit mode électrolyseur, la source primaire 20 fournit une énergie électrique au dispositif 10. Dans ce mode, l'électrolyseur 100 convertit l'énergie électrique fournie par la source primaire 20 en énergie chimique de stockage, c'est-à-dire qu'il convertit l'énergie électrique primaire en dihydrogène et en dioxygène sous forme gazeux.

Le gaz de dihydrogène (H₂) et le gaz de dioxygène (O₂) ainsi produits par électrolyse de l'eau sont acheminés à l'extérieur de l'enceinte 100 au moyen de l'interface 116.

Les moyens de connexion 140, du type tuyauterie permettant la circulation de gaz, sont connectés à l'interface 116 de manière à acheminer les gaz vers les moyens de stockage 200.

Le gaz de dihydrogène (H₂) est acheminé, via des moyens de connexion 141, vers des moyens de stockage de dihydrogène (H₂) 210.

Le gaz de dioxygène (O₂) est acheminé, via des moyens de connexion 142, vers des moyens de stockage de dioxygène (O₂) 220.

A cet effet, les moyens de connexion 141 et 142 comportent une pluralité d'interfaces 122 réparties sur la longueur des moyens de connexion 141, 142. Les interfaces 122 sont des interfaces de flux de gaz et des interfaces de commandes électriques permettant de connecter un moyen de stockage 210, 220 au dispositif 10, notamment à un moyen de connexion 141, 142. Les interfaces 122 peuvent comporter un système de vannes permettant d'isoler sur demande le moyen de stockage 210, 220 du flux de gaz circulant dans les moyens de connexion 141, 142.

Pendant le second mode de fonctionnement, dit mode pile à combustible, le dihydrogène (H₂) et le dioxygène (O₂) stockés dans les moyens de stockage 210 et 220 sont acheminés vers l'enceinte 100, via les moyens de connexion respectifs 141 et 142, et introduits dans l'enceinte 100 via l'interface 116 de façon à être convertis en énergie électrique par la pile à combustible 120 du dispositif 10.

La pile à combustible 120 permet donc de combiner, par réaction électrochimique, le dihydrogène (H₂) stocké dans les moyens de stockage 210 et le dioxygène (O₂) stocké dans les moyens de stockage 220 pour former de l'eau et fournir une énergie électrique secondaire à un réseau électrique 30.

La gestion du basculement du premier mode au second mode de fonctionnement est réalisée par les moyens de contrôle-commande 130 qui activent de façon alternée soit l'électrolyseur 110 du dispositif 10, en mode de fonctionnement électrolyseur, soit la pile à combustible 120 du dispositif 10, en mode de fonctionnement pile à combustible.

Le basculement de mode de fonctionnement du premier mode au second mode et inversement est déterminé en fonction de paramètres définis par l'utilisateur. Ces paramètres sont notamment dépendants du niveau de puissance de la source primaire 20. En cas d'insuffisance de puissance électrique ou encore en cas de défaut d'alimentation de la source primaire 20, le dispositif 10 bascule du mode électrolyseur au mode pile à combustible de façon à fournir une énergie électrique sur la charge électrique cliente ou sur le réseau électrique 30, dite énergie électrique secondaire.

Les moyens de stockage de gaz 200 formés par des moyens de stockages distincts de dihydrogène 210 et de dioxygène 220 sont par exemple des citernes aptes à stocker du gaz sous pression.

La régulation et la circulation des gaz de dihydrogène (H₂) et de dioxygène (O₂), à l'intérieur de l'enceinte 100, mais également entre l'enceinte 100 et les moyens de stockage 200 sont contrôlées par les moyens de contrôle-commande 130, via le pilotage d'un jeu de vannes (non représentées) intégrées dans chaque interface 112, 114, 116, 122.

Ainsi, les moyens de connexion 141 et 142 permettent d'acheminer à la fois les gaz produits en mode électrolyseur, de l'enceinte 100 vers les moyens de stockage 200, selon le sens indiqué par la flèche 150, mais également en sens inverse, c'est-à-dire des moyens de stockage 200 vers l'enceinte 100 tel qu'illustré par la flèche 160, en mode pile à combustible.

Chacune des vannes du dispositif peut être pilotée en ouverture et en fermeture de façon indépendante, de sorte que l'utilisateur peut optimiser la gestion des flux de gaz de l'installation. L'ouverture et la fermeture de chaque moyen de stockage 200 permet ainsi de gérer indépendamment la contenance d'un ou de plusieurs moyens de stockage 210, 220 spécifique(s), ou encore de remplir et/ou de vider de façon prioritaire un moyen de stockage spécifique par exemple pour un contrôle ou une maintenance.

Les vannes des interfaces 122 combinées aux vannes de l'interface 116 permettent également de transvaser la contenance d'un moyen de stockage 210, 220 vers un deuxième de moyen de stockage 210, 220 si besoin.

Avantageusement, les vannes de chaque interface sont pilotées électriquement par les moyens de contrôle-commande 130, les différentes interfaces 112, 114, 116, 122 étant reliées électriquement au moyen de contrôle-commande 130.

Les moyens de stockage 200 sont ainsi des éléments autonomes et modulaires du dispositif 10 qu'il est possible d'ajouter et/ou de supprimer de façon simple et rapide. En effet, les moyens de stockage 200 comportent également une interface permettant le démontage rapide étanche d'une connexion de type d'une tuyauterie de gaz.

Ainsi, l'ajout d'un moyen de stockage 210' supplémentaire (illustré en pointillé sur la figure 1) est réalisé simplement par connexion ou branchement du moyen de stockage 210' sur l'une des interfaces 122 au moyen d'une tuyauterie de gaz.

Selon un second mode de réalisation, les vannes permettant l'ouverture/fermeture de façon indépendante des moyens de stockage 200 sont directement solidaires du moyen de stockage 210, 220. Dans ce mode de réalisation, les moyens de stockage 210, 220 comportent des moyens de connexion électrique pour le pilotage de la vanne via les moyens de contrôle-commande 130 en plus d'une tuyauterie de gaz reliant le moyen de stockage 210, 220 à une interface 122,

Selon une variante de réalisation de l'invention, les gaz entrant et sortant de l'enceinte 100 sont acheminés entre l'enceinte 100 et les moyens de stockage 200 par deux conduits d'acheminement différents, de sorte qu'un moyen de stockage comporte deux conduits d'amenés (un conduit d'entrée et un conduit de sortie) connectés avec une interface 122 du dispositif 10.

Les moyens 170 pour convertir l'énergie électrique permettent d'adapter la puissance et le type de courant de la source primaire 20 à la puissance et au type de courant nécessaire pour le fonctionnement de l'électrolyseur 110. A cet effet les moyens 170 sont formés par un convertisseur courant alternatif/courant continu (AC/DC pour Alternating Current/Direct Current en langue anglaise) et/ou par un convertisseur continu/continu (DC/DC) si par exemple la source primaire est une source de courant continu, telle que par exemple des cellules photovoltaïques.

Les mêmes moyens 170 sont également utilisés pour la conversion de l'énergie électrique produite par la pile à combustible 120 (de type courant continu) en courant alternatif ou en courant continu, selon les besoins du réseau 30. Les moyens 170 peuvent être refroidis par un circuit de refroidissement utilisé pour refroidir l'électrolyseur et la pile à combustible.

Les moyens de refroidissement (non représentés) de l'enceinte 100 permettent de refroidir l'enceinte 100 et d'évacuer la chaleur dégagée par les réactions électrochimiques de la pile à combustible et de l'électrolyseur. Les moyens de refroidissement sont formés par exemple par un circuit de refroidissement circulant entre les cellules électrolytiques de la pile à combustible et/ou de l'électrolyseur, par un système de ventilation permettant le refroidissement de l'enceinte 100 ou encore par une combinaison d'un circuit de refroidissement et d'un système de ventilation, ou par tout autre type de système de refroidissement classiquement utilisé pour le refroidissement d'une pile à combustible ou d'un électrolyseur.

Selon un autre mode de réalisation, la chaleur récupérée dans l'enceinte 100 par le circuit de refroidissement peut être réutilisée comme par exemple pour le chauffage, le rafraichissement ou la climatisation (à l'aide d'un dispositif supplémentaire) du bâtiment dans lequel se trouve le dispositif 10, ou stockée éventuellement pour un usage ultérieur, toujours pour une utilisation en chauffage, rafraichissement ou climatisation.

De façon classique, l'enceinte 100 peut comporter également des moyens de purification des gaz produits en mode électrolyseur de façon à séparer l'eau sous forme vapeur présente dans les produits de l'électrolyseur 110 et également de façon à éliminer les traces d'impuretés dans les gaz telles que l'oxygène dans l'hydrogène et vice versa.

L'enceinte 100 peut également comporter des moyens d'humidification permettant d'humidifier les gaz stockés dans les moyens de stockage avec de la vapeur d'eau avant leur acheminement vers la pile à combustible 120.

L'enceinte peut également comporter des moyens de compression permettant de mettre sous pression les gaz produits par l'électrolyseur 110 avant de les stocker dans les moyens de stockage.

Avantageusement, l'enceinte 100 a une longueur d'une dizaine de mètre et de quelques mètres de largeur et de hauteur.

Ainsi, l'enceinte 100 forme un conditionnement compact et autonome permettant de stocker et de restituer de l'énergie électrique comportant une pile à combustible, un électrolyseur ainsi que les différents éléments nécessaires à leur fonctionnement à l'exception des moyens de stockage de gaz qui sont volumineux.

A titre d'exemple un container de dimension 12m x 2,40m x 2,30m est suffisant pour recevoir une pile à combustible de 500kW et un électrolyseur de 70Nm3/h ainsi que les différents éléments nécessaires à leur fonctionnement.

Selon un deuxième mode de réalisation de l'invention, le dispositif 10 ne comporte que des moyens de stockage de dihydrogène 220. Dans ce mode de réalisation, l'enceinte dispose d'une soupape d'évacuation (non représentée) permettant de laisser s'échapper le dioxygène, produit en mode électrolyseur, dans l'atmosphère ambiant ainsi qu'une soupape d'entrée permettant d'alimenter la pile à combustible en dioxygène, par l'admission d'air, en mode de fonctionnement pile à combustible. Dans un autre exemple de réalisation, le dioxygène est récupéré pour être utilisé à d'autres fins, par exemple dans l'industrie chimique.

De façon préférentielle, la soupape d'évacuation et la soupape d'entrée de dioxygène (O₂) sont réalisées par une seule et unique soupape.

Ce deuxième mode de réalisation permet donc de réduire l'espace alloué au stockage des gaz pour le fonctionnement du dispositif mais également d'optimiser l'espace alloué de façon à augmenter la capacité de stockage de dihydrogène qui influe directement sur la capacité de restitution d'énergie électrique du dispositif.

Grâce à l'externalisation des moyens de stockage 200 de l'enceinte 100, il est possible d'adapter simplement la contenance et/ou le nombre des citernes dédiées au stockage des gaz afin d'adapter le dispositif 10 au besoin de l'utilisateur en fonction de la capacité d'énergie électrique demandée.

Ainsi, avec une même enceinte 100, c'est-à-dire avec un électrolyseur 110 et une pile à combustible 120 de capacité figée, il est possible de faire varier la capacité de stockage et donc la capacité de restitution d'énergie électrique, c'est-à-dire la durée pendant laquelle le dispositif 10 est capable de fournir une valeur de puissance électrique donnée.

La modularité et la démontabilité rapide et simplifiée des différents éléments constituant le dispositif, tels que les cellules électrolytiques réversibles, les moyens de stockage de gaz, les tuyauteries de gaz, les interfaces, ou encore les enceintes elle mêmes, permettent d'obtenir un dispositif de stockage et de restitution d'énergie électrique entièrement paramétrable et adaptable en fonction des besoins de chaque utilisateur.

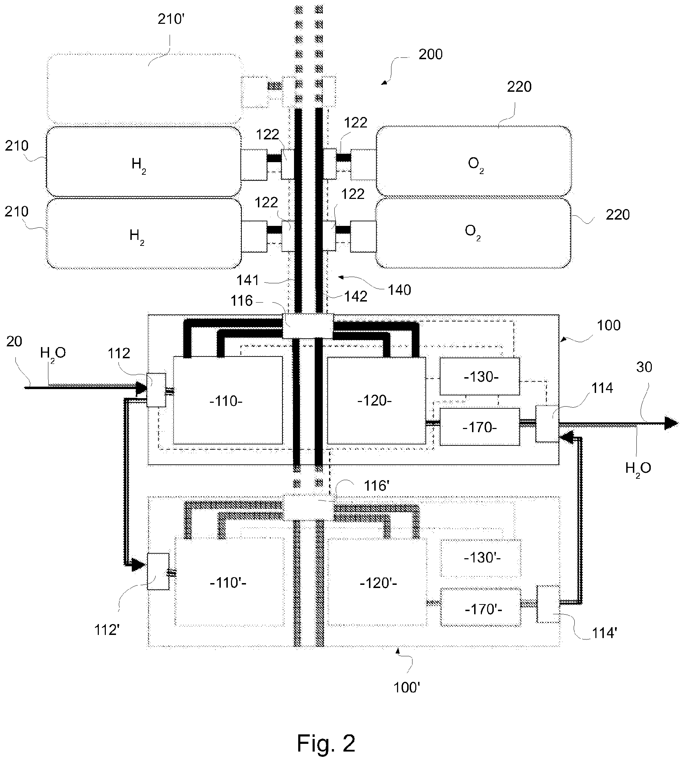

Selon un second exemple de réalisation illustré à la figure 2, il est possible de combiner plusieurs enceintes 100 telles que décrites précédemment, de façon à adapter la puissance ou la capacité de stockage de gaz en fonction de la demande de l'utilisateur. Dans l'exemple illustré, la deuxième enceinte 100' est connectée à la première enceinte 100. Les gaz ainsi produits ou nécessaires à la production d'énergie électrique secondaire sont stockés par les mêmes moyens de stockage 200.

La connexion de plusieurs enceintes est réalisée simplement par le branchement en parallèle des différentes interfaces de chaque enceinte de la façon suivante :
- l'interface d'entrée 112' de la deuxième enceinte 100' est reliée à l'interface d'entrée 112 de la première enceinte 100 par exemple au moyen d'une tuyauterie de circulation de fluide et d'une liaison de puissance électrique ;
- l'interface de sortie 114' de la deuxième enceinte 100' est reliée à l'interface de sortie 114 de la première enceinte 100 par exemple au moyen d'une tuyauterie de circulation de fluide et d'une liaison de puissance électrique ;
- l'interface 116' de la deuxième enceinte 100' est reliée à l'interface 116 de la première enceinte 100 par exemple au moyen de tuyauteries de circulation de gaz et d'une liaison de commande électrique.

L'électrolyseur du dispositif selon l'invention est indifféremment, par exemple, un électrolyseur de type à membrane échangeuse de protons (PEM pour « Proton Exchange Membrane » en langue anglaise), un électrolyseur de type alcalin, un électrolyseur à haute température (HTE pour « High-Temperature Electrolysis » en langue anglaise), un électrolyseur à oxyde solide (SOEC pour « Solid Oxide Electrolysis Cell » en langue anglaise), ou encore une combinaison de ces différentes technologies d'électrolyseurs.

La pile à combustible du dispositif selon l'invention est indifféremment, par exemple, une pile à combustible à membrane échangeuse de protons (PEM), une pile à combustible à acide phosphorique (PAFC pour « Phosphoric Acid Fuel Cell » en langue anglaise), une pile à combustible à oxyde solide (SOFC (pour « Solid Oxide Fuel Cell » en langue anglaise), une pile à combustible à carbonate fondu (MCFC pour « Molten Carbonate Fuel Cell » en langue anglaise), une pile à combustible alcaline, une pile à combustible à méthanol direct (DMFC pour « direct methanol fuel cell » en langue anglaise), ou encore une combinaison de ces différentes technologies de piles à combustible.

Les différents éléments du dispositif selon l'invention peuvent comporter un système de gestion de l'horizontalité afin de pourvoir être installés sur n'importe quel sur terrain, préparé ou non.

Le dispositif selon l'invention permet également de simplifier la maintenance d'un tel dispositif par la standardisation des différents éléments constituants le dispositif.

Les autres avantages de l'invention sont notamment les suivants :
- industrialisation simplifiée par la standardisation des différents éléments constituants le dispositif ;
- réduction des coûts de fabrication ;
- modularité du dispositif de façon à obtenir la puissance électrique requise :
- réduction de l'impact écologique par le démantèlement sélectif et/ou la réutilisation des éléments dans des futures utilisations.

## Revendications

1. Dispositif (10) de stockage et de restitution d'énergie électrique comportant :
- des moyens (110) d'électrolyse de l'eau alimentés en entrée par de l'eau et de l'énergie électrique et produisant en sortie au moins du dihydrogène (H₂) et du dioxygène (O₂) sous forme gazeux :
- des moyens de stockage (210) dudit dihydrogène (H₂) sous forme gazeux ;
- une pile à combustible (120) alimentée en entrée par au moins le dihydrogène (H₂) stocké et produisant en sortie au moins de l'énergie électrique :
- des moyens de contrôle-commande (130) pour contrôler le fonctionnement dudit dispositif (10) en mode pile à combustible ou en mode électrolyseur ;
- une enceinte de type container autonome (100) dans lequel sont agencés lesdits moyens d'électrolyse de l'eau (110), ladite pile à combustible (120) et lesdits moyens de contrôle-commande (130) ;
- ladite enceinte (100) présentant des interfaces de communication (112, 114, 116) standards permettant au moins une connexion démontable d'énergie électrique, une connexion démontable de tuyauterie d'eau et une connexion démontable de tuyauterie de gaz ;
- lesdites interfaces de communication étant formées par une interface d'entrée (112) comportant une connexion démontable d'énergie électrique et une connexion démontable de tuyauterie d'eau, par une interface de sortie (114) comportant une connexion démontable d'énergie électrique et une connexion démontable de tuyauterie d'eau, et par une interface de communication (116) avec les moyens de stockage dudit dihydrogène comportant une connexion démontable de commande électrique et une connexion démontable de tuyauterie de dihydrogène ;
- des moyens de connexion (141) connectés à l'interface de communication (116) avec les moyens de stockage dudit dihydrogène, lesdits moyens de connexion (141) permettant de relier ladite enceinte (100) aux dits moyens de stockage (210) dudit dihydrogène (H₂) externes à ladite enceinte (100) lesdits moyens de connexion comportant une pluralité d'interfaces (122) reparties sur la longueur des moyens de connexions (141) autorisant une connexion démontable et étanche des moyens de stockage (210, 220) de façon à les rendre modulaires;
- chaque interface de ladite enceinte et chaque interface des moyens de connexion comportant un jeu de vannes pilotées par les moyens de contrôle-commande.

2. Dispositif (10) de stockage et de restitution d'énergie électrique selon la revendication précédente **caractérisé en ce qu'**il comporte des moyens de stockage (220) dudit dioxygène (O₂) sous forme gazeux.

3. Dispositif (10) de stockage et de restitution d'énergie électrique selon la revendication 2 **caractérisé en ce que** ledit dispositif comporte des moyens de connexions (142) reliant ladite enceinte (100) aux dits moyens de stockage (220) dudit dioxygène (O₂) externes à ladite enceinte (100).

4. Dispositif (10) de stockage et de restitution d'énergie électrique selon la revendication 3 **caractérisé en ce que** ladite pile à combustible (120) est alimentée en entrée par ledit dioxygène (O₂) stocké,

5. Dispositif (10) de stockage et de restitution d'énergie électrique selon l'une des revendications 1 à 4 **caractérisé en ce que** ladite enceinte (100) comporte des moyens de conversion d'énergie électrique communs au dit électrolyseur (110) et à ladite pile à combustible (120).

6. Dispositif (10) de stockage et de restitution d'énergie électrique selon l'une des revendications 1 à 5 **caractérisé en ce que** ladite enceinte (100) comporte des moyens de refroidissement communs au dit électrolyseur (110) et à ladite pile à combustible (120).

7. Dispositif (10) de stockage et de restitution d'énergie électrique selon l'une des revendications 1 à 6 **caractérisé en ce que** ladite enceinte (100) comporte un réservoir d'eau permettant d'alimenter ledit électrolyseur (110) et permettant de stocker l'eau produite de ladite pile à combustible (120).

8. Dispositif (10) de stockage et de restitution d'énergie électrique selon l'une des revendications 1 à 7 **caractérisé en ce que** ladite enceinte (100) est alimentée en entrée par une source (20) d'énergie renouvelable et/ou par une source d'énergie fossile et/ou par une source d'énergie nucléaire.

9. Dispositif (10) de stockage et de restitution d'énergie électrique selon l'une des revendications 1 à 8 **caractérisé en ce qu'**il comporte des moyens de récupération de chaleur, notamment un circuit de refroidissement de l'enceinte (100)

## Patentansprüche

1. Speicher- und Wiedergabevorrichtung (10) elektrischer Energie, umfassend:
- Elektrolysezellen (110) des Wassers, die am Eingang durch Wasser und elektrische Energie gespeist sind und am Ausgang wenigstens Di-Wasserstoff (H₂) und Di-Sauerstoff (O₂) in gasförmiger Form produzieren;
- Speichermittel (210) des genannten Di-Wasserstoffs (H₂) in gasförmiger Form;
- eine Brennstoffzelle (120), die am Eingang durch wenigstens den gespeicherten Di-Wasserstoff (H₂) versorgt ist und am Ausgang wenigstens elektrische Energie produziert;
- Mittel zur Steuerkontrolle (130) zum Kontrollieren des Betriebs der genannten Vorrichtung (10) im Brennstoffzellenmodus oder im Elektrolysemodus;
- eine Einfassung vom Typ autonomer Behälter (100), in dem die genannten Elektrolysezellen des Wassers (110), die genannte Brennstoffzelle (120) und die genannten Mittel zur Steuerkontrolle (130) angeordnet sind;
- wobei die genannte Einfassung (100) standardmäßige Kommunikationsschnittstellen (112, 114, 116) aufweist, die wenigstens einen abnehmbaren Anschluss für elektrisch Energie, einen abnehmbaren Anschluss für Wasserrohrleitungen und einen abnehmbaren Anschluss für Gasrohrleitungen umfasst;
- wobei die genannten Kommunikationsschnittstellen durch eine Eingangsschnittstelle (112), umfassend einen abnehmbaren Anschluss für elektrische Energie und einen abnehmbaren Anschluss für Wasserrohrleitungen durch eine Ausgangsschnittstelle (114), umfassend einen abnehmbaren Anschluss für elektrische Energie und einen abnehmbaren Anschluss für Wasserrohrleitungen, und durch eine Kommunikationsschnittstelle (116) mit Speichermitteln des genannten Di-Wasserstoffs, umfassend einen abnehmbaren Anschluss zur elektrischen Steuerung und einen abnehmbaren Anschluss der Di-Wasserstoffrohrleitungen gebildet sind;
- Anschlussmittel (141), die an die Kommunikationsschnittstelle (116) mit den Speichermitteln des genannten Di-Wasserstoffs angeschlossen sind, wobei die genannten Anschlussmittel (141) das Verbinden der genannten Einfassung (100) mit den genannten Speichermitteln (210) des genannten Di-Wasserstoffs (H₂) zulassen, die außen an der genannten Einfassung (100) sind, wobei die genannten Anschlussmittel eine Vielzahl von Schnittstellen (122) umfassen, die über die Länge der Anschlussmittel (141) verteilt sind, die einen abnehmbaren und wasserdichten Anschluss der Speichermittel (210, 220) derart zulassen, dass sie modular gemacht werden;
- wobei jede Schnittstelle der genannten Einfassung und jede Schnittstelle der Anschlussmittel einen Satz Ventile umfassen, die durch Mittel zur Steuerkontrolle gesteuert sind.

2. Speicher- und Wiedergabevorrichtung (10) elektrischer Energie gemäß dem voranstehenden Anspruch, **dadurch gekennzeichnet, dass** sie Speichermittel (220) des genannten Di-Sauerstoffs (O₂) in gasförmiger Form umfasst.

3. Speicher- und Wiedergabevorrichtung (10) elektrischer Energie gemäß Anspruch 2, **dadurch gekennzeichnet, dass** die genannte Vorrichtung Anschlussmittel (142) umfasst, die die genannte Einfassung (100) mit den genannten Speichermitteln (220) des genannten Di-Sauerstoffs (O₂) verbindet, die außen an der genannten Einfassung (100) sind.

4. Speicher- und Wiedergabevorrichtung (10) elektrischer Energie gemäß Anspruch 3, **dadurch gekennzeichnet, dass** die genannte Brennstoffzelle (120) am Eingang durch den genannten gespeicherten Di-Sauerstoff (O₂) versorgt ist.

5. Speicher- und Wiedergabevorrichtung (10) elektrischer Energie gemäß einem der Ansprüche 1 bis 4, **dadurch gekennzeichnet, dass** die genannte Einfassung (100) Konvertierungsmittel elektrischer Energie umfasst, die der genannten Elektrolysezelle (110) und der genannten Brennstoffzelle (120) gemeinsam sind.

6. Speicher- und Wiedergabevorrichtung (10) elektrischer Energie gemäß einem der Ansprüche 1 bis 5, **dadurch gekennzeichnet, dass** die genannte Einfassung (100) Abkühlmittel umfasst, die der genannten Elektrolysezelle (110) und der genannten Brennstoffzelle (120) gemeinsam sind.

7. Speicher- und Wiedergabevorrichtung (10) elektrischer Energie gemäß einem der Ansprüche 1 bis 6, **dadurch gekennzeichnet, dass** die genannte Einfassung (100) einen Wassertank umfasst, der das Versorgen der genannten Elektrolysezelle (110) zulässt und das Speichern des produzierten Wassers der genannten Brennstoffzelle (120) zulässt.

8. Speicher- und Wiedergabevorrichtung (10) elektrischer Energie gemäß einem der Ansprüche 1 bis 7, **dadurch gekennzeichnet, dass** die genannte Einfassung (100) am Eingang durch eine Quelle (20) erneuerbarer Energie und / oder durch eine Quelle fossiler Energie und / oder durch eine Quelle nuklearer Energie versorgt ist.

9. Speicher- und Wiedergabevorrichtung (10) elektrischer Energie gemäß einem der Ansprüche 1 bis 8, **dadurch gekennzeichnet, dass** sie Mittel zur Wärmerückgewinnung, insbesondere einen Kühlkreislauf der Einfassung (100), umfasst.

## Claims

1. A device (10) for storing and restoring electrical energy comprising:
- water electrolysis means (110) supplied at the inlet with water and electrical energy and producing at the outlet at least dihydrogen (H₂) and dioxygen (O₂) in gaseous form;
- means for storing (210) said dihydrogen (H₂) in gaseous form;
- a fuel cell (120) supplied at the inlet with at least the stored dihydrogen (H₂) and producing at the outlet at least the electrical energy;
- monitoring/control means (130) to control the operation of said device (10) in fuel cell mode or in electrolyzer mode;
- an autonomous chamber type (100) in which said water electrolysis means (110), said fuel cell (120) and said monitoring/control means (130) are arranged;
- said chamber (100) comprises standard communication interfaces (112, 114, 116) enabling a detachable connection of an electrical power supply, a detachable connection of a water supply and/or a detachable connection of a pipework for circulating gas;
- said communication interfaces comprises an inlet interface (112) with a detachable connection of an electrical power supply and a detachable connection of a water supply, an outlet interface (114) with a detachable connection of an electrical power supply and a detachable connection of a water supply, and a communication interface (116) with storage means of said dihydrogen comprising a detachable connection of electrical control and a detachable connection of dihydrogen pipework;
- connection means (141) connected to the interface communication (116) with storage means of said dihydrogen, said connection means (141) enabling said chamber (100) to be connected to said storage means (210) for storing said dihydrogen (H₂) outside of said chamber (110), said connection means (141, 142) comprise a plurality of interfaces (122) distributed over the length of connection means (141) enabling an impermeable and detachable connection of storage means (210, 220) so as to make the means modular;
- each interface of said chamber and each interface of connection means comprising valves electrically connected to the monitoring/control means.

2. The device (10) for storing and restoring electrical energy according to the previous claim **characterized in that** the device comprises means for storing (220) said dioxygen (O₂) in gaseous form.

3. The device (10) for storing and restoring electrical energy according to claim 2 **characterized in that** said device comprises connection means (142) connecting said chamber (100) to said means for storing (220) said dioxygen (O₂) outside of said chamber (100).

4. The device (10) for storing and restoring electrical energy according to claim 3 **characterized in that** said fuel cell (120) is supplied at the inlet with said stored dioxygen (O₂).

5. The device (10) for storing and restoring electrical energy according to one of claims 1 to 4 **characterized in that** said chamber (100) comprises means for converting electrical energy common to said electrolyzer (110) and to said fuel cell (120).

6. The device (10) for storing and restoring electrical energy according to one of claims 1 to 5 **characterized in that** said chamber (100) comprises cooling means common to said electrolyzer (110) and to said fuel cell (120).

7. The device (10) for storing and restoring electrical energy according to one of claims 1 to 6 **characterized in that** said chamber (100) comprises a water reservoir supplying said electrolyzer (110) and enabling the water produced from said fuel cell (120) to be stored.

8. The device (10) for storing and restoring electrical energy according to one of claims 1 to 7 **characterized in that** said chamber (100) is supplied at the inlet with a source (20) of renewable energy and/or with a source of fossil energy and/or with a source of nuclear energy.

9. The device (10) for storing and restoring electrical energy according to one of claims 1 to 8 **characterized in that** the device comprises heat recovery means, particularly a circuit for cooling the chamber (100).
